# EUROPEAN PATENT SPECIFICATION

(11) **EP 2 308 218 B1**
(45) Date of publication and mention of the grant of the patent: **25.03.2020**
(21) Application number: 09802520.8
(22) Date of filing: 29.07.2009
(51) Int. Cl.: H04L 29/08, H04L 12/24

(54) **CONFIGURATION OF A COMMUNICATION DEVICE**
KONFIGURATION EINER KOMMUNIKATIONSVORRICHTUNG
CONFIGURATION D'UN DISPOSITIF DE COMMUNICATION

(30) Priority: 31.07.2008 EP 08104931
(43) Date of publication of application: 13.04.2011
(73) Proprietor: Nokia Solutions and Networks Oy, 02610 Espoo (FI)
(72) Inventor: KIISKI, Matti, Tapani, 90460 Oulunsalo (FI); KINNUNEN, Tero-Matti, FI-36240 Kangasala (FI); VESTERINEN, Seppo, Ilmari, FI-90460 Oulunsalo (FI)
(74) Representative: Nokia EPO representatives
(86) International application number: PCT/EP2009/059812
(87) International publication number: WO 2010/012774

(56) References cited:
- US-A1- 2007 268 516

## Description

The present invention relates to the configuration of a communication device and, in particular, to the automatic and autonomous configuration of a Home Base Station.

Home Base Stations (HBS), which are also known as Femto Cells or Residential Cells amongst other names, are communication devices that are typically designed for use in residential or business premises. The HBS is deployed in a user's home or office in order to extend service coverage for mobile communication, including voice and data communication, and is therefore useful in areas where service coverage for mobile communication is limited or unavailable. The HBS provides a connection to a service provider's network typically via a broadband connection so that when a user, for example, makes a voice call from a mobile device such as a mobile phone, the call is routed to the user's Network Operator and service provider via the HBS over the broadband connection.

It is expected that in the future hundreds if not thousands of the HBSs will be deployed in residential and business premises thereby significantly increasing the size of each Network Operator's network. The large number of HBSs expected to be deployed would simply be too great for a Network Operator to be able to support planned deployment of the HBSs and provide resources, for example, man-power to install each HBS.

Another problem with the expected volume of HBSs being deployed in a network is that those HBSs will be deployed by the user in locations that are not known in advance.

Therefore, each HBS deployment will be un-coordinated where automatic configuration and integration of the HBS to an Operator's network will become a requirement. This process of automated network deployment is known as Self Organising Networks (SON).

However, the process of deploying and integrating each HBS into a Network Operator's network in an unplanned and uncoordinated manner has several problems which are discussed below.

The HBS will typically be sold by retailers to the user. It is problematic for the user if each HBS manufactured is bound to a specific Network Operator as the user will not have the freedom to choose a HBS that comprises the features which best suit the user's requirements. Therefore, it is preferable that each HBS manufactured is independent of and not bound to any particular Network Operator. However, if a HBS is not bound to any Network Operator then there is the additional problem of how to configure each HBS to work in any one of a number of Network Operators' networks.

Furthermore, if each HBS is independent of any particular Network Operator then a further problem is how to install the configuration information in the HBS in a secure and cost efficient manner without the need for any special technical tools, equipment or knowledge by the user or retailer.

Several different processes are known for installing configuration information of a particular Network Operator into the HBS.

For example, once the user has purchased the HBS and provided their personal information and the Network Operator subscription information to the retailer, the retailer receives the configuration information for the HBS from the Network Operator. The retailer, using a computer, may write the configuration information onto a memory card, or SIM card, which is then given to the user to insert into the HBS. This method of entering the installation information into the HBS is secure as the user has no direct control over entering the actual configuration information into the HBS as the HBS reads the configuration information directly from the memory card or SIM card.

However, this method has the disadvantage is that each HBS must be fitted with a memory card reader, or a SIM card reader, which will increase the cost of manufacturing the HBS thereby increasing the cost to the user of the HBS. Furthermore, the cost in producing the memory cards, or the SIM cards, will also increase the cost to the user of purchasing the HBS.

Other known methods for entering the installation information into the HBS include:
- the retailer, using a computer terminal, prints out a paper copy of the received configuration information which the retailer provides to the user;
- the retailer, using a computer terminal, sends an SMS, MMS or file to the user's mobile device, e.g. a mobile phone, containing the configuration information;
- the retailer, using a computer terminal, sends an e-mail to the user which contains the configuration information.

In each of the above methods, the user on setting up the HBS has to directly interact with the HBS to either enter the installation information into the HBS manually or perform a data transfer to the HBS from another device, for example, the user's computer or mobile phone.

However, the above described methods for entering the configuration information into the HBS have several disadvantages. The methods require the user to directly interact with the HBS in order to enter the configuration information into the HBS. Therefore, the user requires the necessary technical skills to connect to and enter the required installation information correctly.

Moreover, in order to connect with the HBS the user will need to interface in some manner with the HBS, for example, by Bluetooth™, by infrared, by a LAN from the user's computer and so on. This requirement would increase the cost of the HBS as it would need to be manufactured with the additional interfaces. This also requires the user to have the necessary software and corresponding interface which the user may not have and may not be willing to purchase.

Additionally, in most of the above methods the user is given control of entering the configuration information into the HBS. By giving the user this control over entering the configuration information then there is an opportunity, or the possibility, for fraud and/or abuse by some users who may alter the configuration information provided by the Network Operator.

As such, there exist several significant problems and disadvantages with the known methods of entering the configuration information into a HBS that is deployed at a user's premises by the user.

US 2007/0268516 A1 relates to a system capable of carrying out configuration of remote network devices. The system has a remote network device to be configured and a management system having a management server. The remote network device requests configuration information from the management system, the management system determines the relevant configuration information and provides this information to the remote network device, and the remote network device uses the information to configure itself.

According to a first aspect of the present invention there is provided a method of operating a web server for configuring a communication device to operate in a network according to claim 1.

Therefore, in the preferred embodiments the web sever stores a parameter related to the communication device hardware along with installation information that has been generated for the communication by the Network Operator to which the communication device will be subscribed. The web sever receives a request from the communication device for the installation information which the web server transmits to the communication device. Thus, the communication device can be configured without any direct interaction with the actual communication device from the user or any other human agent.

Preferably, the web server receives the at least one hardware parameter from either a manufacturer of the communication device or a retailer of the communication device.

Preferably, the web server receives the installation information from a retailer's terminal wherein the installation information is generated by a Network Operator server.

Preferably, the method further comprises the steps of receiving user information from a retailer's terminal, wherein the user information relates to a user who has purchased the communication device; and storing the user information in the database.

Preferably, the method further comprises the step of linking the received at least one hardware parameter with the received installation information in the database.

Preferably, the step of receiving the request from the communication device includes receiving a security token from the communication device; and authenticating the request from the communication device using the received security token.

Preferably, the step of transmitting the installation information to the communication device further comprises the steps of retrieving the installation information from the database that is linked to the at least one hardware parameter of the communication device; and transmitting the retrieved installation information to the communication device.

Accordingly, as the web server may be used in the process of configuring hundreds or even thousands of communication devices where each communication device may be subscribed to any one of several available Network Operators then preferably the installation information is linked with the hardware parameters of the communication device, such as a unique serial number, so that the specific installation information for a particular communication device can be retrieved. Alternatively, or additionally, the installation information may be linked to the user information, such as the user's mobile phone number, which is also unique to the user.

According to a second aspect of the present invention there is provided a web server according to claim 4.

According to a third aspect of the present invention there is provided a computer program product according to claim 5.

Preferably, the computer program product is stored on a computer-readable medium.

According to a fourth aspect of the present invention there is provided a method of configuring the communication device to operate in a network according to claim 6.

Accordingly, the preferred embodiments of the present invention have an advantage over the conventional systems in that the communication device can automatically and autonomously obtain and retrieve installation information that is used in the process of configuring the communication device into an operational state in a Network Operator's network. Thus, the communication device can configure itself without any direct interaction to the communication device from the user or any other human agent, such as the retailer.

Preferably, the method further comprises the steps of pre-configuring the communication device with a security token; and transmitting the security token to the web server so that the web server can authenticate the communication device as part of the step of connecting to the web server.

Preferably, the method further comprises the steps of pre-configuring the communication device with at least one hardware parameter wherein the at least one hardware parameter is unique to the communication device; and transmitting the at least one hardware parameter that is unique to the communication device to the web server as part of the step of connecting to the web server.

Preferably, the step of pre-configuring occurs during the manufacturing process and includes storing the pre-configured information in non-volatile memory in the communication device.

Preferably, the address of the web server is defined as either a Uniform Resource Locator (URL) or an IP address.

Preferably, the received installation information comprises an address of a Network Operator server and the step of processing the received installation information further comprises the steps of storing the installation information in non-volatile memory in the communication device; retrieving the address of a Network Operator server from the non-volatile memory; connecting to the Network Operator server; receiving configuration information from the Network Operator server; and processing the received configuration information.

Preferably, the method further comprises the step of configuring the communication device in accordance with the received configuration information such that the communication device is operational within the Network Operator's network.

Preferably, the address of the Network Operator server is defined as either a Uniform Resource Locator (URL) or an IP address.

Preferably, the step of connecting to the Network Operator server includes transmitting the hardware parameters of the communication device to the Network Operator server.

Preferably, the method further comprises the step of connecting the communication device to a network and to a power source.

Accordingly, in the preferred embodiments the communication device, once connected to a power source and to a network connection such as a broadband connection, automatically connects with a web server. The address of the web server is pre-configured into the communication device preferably during the manufacturing process. In the preferred embodiments the communication device receives installation information from the web server which at least defines an address of the Network Operator's server. Typically, there are multiple Network Operators to which the user may subscribe. An advantage of the preferred embodiments is that the communication device is not bound to any particular Network Operator at the point of sale to the user. Therefore, the communication device needs to be configured for use with the particular Network Operator to which the user has purchased a subscription.

Once the communication device receives the installation information it processes the received information to retrieve the address of the Network Operator's server and connects to the Network Operator's server either directly or via other communication units such as a gateway. The communication device then receives the configuration information from the Network Operator which the communication device processes in order to configure the communication device into an operational state and is deployed in the Network Operator's network.

Accordingly, the preferred embodiments of the present invention enable a communication device, e.g. a Home Base Station, automatically and autonomously without any direct interaction with the communication device from the user or any other human agent such as the retailer.

According to a fifth aspect of the present invention there is provided a communication device according to claim 11.

Preferably, the communication device is a Home Base Station.

Preferably, there is provided a computer program product comprising software code that when executed on a communication device performs the method of pre-configuring the communication device with an address of a web server; retrieving the preconfigured address and connecting to the web server at the address; receiving installation information from the web server; and processing the received installation information.

Preferably, the computer program product is stored on a computer-readable medium.

According to a sixth aspect of the present invention there is provided a method of operating a terminal for configuring a communication device to operate in a networkaccording to claim 12.

Therefore, in the preferred embodiments of the present invention, a terminal, preferably the retailer's terminal, receives hardware parameters along with user information and transmits this information to the Network Operator to which the user will subscribe the communication device for services.

The Network Operator's server receives the information and the installation information for the communication device is generated by the Network Operator. As mentioned above, in the preferred embodiments the installation information includes an address of the Network Operator's server and preferably also a security token so that the communication device can be authenticated by the Network Operator's server at the time that the communication device automatically connects with the Network Operator's server.

The terminal then transmits the received installation information to a web server which stores the installation information in a database until the communication device connects with the web server to retrieve the installation information.

Preferably, the retailer's terminal is located at the retailer's premises and the retailer obtains the hardware parameter information and the user information at the point of sale of the communication device to the user.

However, the terminal could also be, for example, a computer that the user connects with over the Internet if the user is purchasing the communication device online. In this case, the user inputs the user information on the user's computer which is then transmitted to the retailer's computer terminal. The retailer obtains the hardware parameters from the communication device that has been assigned to be sent to the user.

Preferably, the user information includes the user's mobile device number which is to be used in conjunction with the communication device, the Network Operator to which the user is subscribed, or is purchasing a subscription from, the user's name and the user's address, or the address at which the communication device is to be deployed.

Preferably, the hardware parameters of the communication device are received by scanning a barcode attached to the communication device, or attached to the packaging in which the communication device is sold.

The hardware parameters preferably include the type of communication device, a unique serial number of the communication device and a MAC address.

Preferably, the step of transmitting the installation information to the web server comprises the step of connecting to the web server via a secure connection over a network.

Preferably, the step of transmitting the at least one hardware parameter and the user information to the Network Operator server comprises the step of connecting to the Network Operator server via a secure connection over a network.

Preferably, the at least one hardware parameter and/or the user information are transmitted to the web server.

According to a seventh aspect of the present invention there is provided a terminal according to claim 14.

According to an eighth aspect of the present invention there is provided a computer program product according to claim 15.

Preferably, the computer program product is stored on a computer-readable medium.

Accordingly, the preferred embodiments of the present invention enable the communication device to be configured for deployment in a particular Network Operator's network without any direct intervention by the user, or any other human agent such as the retailer. Therefore, as the configuration of the communication device is performed automatically and autonomously there is no requirement for the user to have any special technical knowledge or special equipment. As no special equipment, for example, a SIM card and a SIM card reader is required then the communication device can be manufactured and sold more economically.

Furthermore, as the user does not directly interact with the communication device in terms of configuring the communication device for deployment in a network then the present invention also advantageously prevents any fraudulent activity or misuse by the user to access a network that the user is not allowed or subscribed to. Also, as the user does not directly interact with the communication device then the configuration information will not be entered incorrectly thereby preventing any damage or costly repair due to a human error with the configuration process.

Additionally, as each communication device is advantageously independent of any one particular Network Operator at the point of sale the user can select a communication device based on price and the features offered rather than being limited to only those communication devices that are linked to or bound with a particular Network Operator.

According to the preferred embodiments of the present invention the installation information is received from a Network Operator's server. There are typically several available Network Operators each offering various subscription packages to the user. The Network Operators will each have their own servers to manage subscriptions and to generate the installation and/or configuration information for the communication device so that the communication device can be deployed in the particular chosen Network Operator's network.
Each Network Operator will typically have several servers that cooperate and communicate to perform the required tasks of the Network Operator. However, the Network Operator may only have one or two servers to perform the required tasks. The combination of the Network Operator servers is typically known collectively as the Network Operator's Network Management System.
Preferably, one of the Network Operator's servers is a Network Operator Subscription Management System which receives the hardware parameters of the communication device and the user information from the retailer's terminal. The Network Operator Subscription Management System preferably performs any required validation and authentication of the retailer's terminal and/or the communication device at the time they attempt to connect with the Network Operator's Subscription Management System. Preferably, the Network Operator Subscription Management System forwards the hardware parameters and user information to another of the Network Operator's servers being a Radio Network (RNW) Configuration Server.

Preferably, the RNW configuration server generates installation information, being the information required by the communication device in order to connect with the Network Operator's Management System, and at a later time the configuration information, being the information required by the communication device to configure it into an operational state in the Network Operator's network.

The installation information preferably only contains the minimum information required to enable the communication device to connect to the correct Mobile Network Operator. This has the advantage that the Network Operator retains control of the final configuration of the communication device into an operational state for deployment in the Network Operator's network. This is advantageous as most of the radio parameters are dynamic and can be created only when a communication device is connected to Operator's Network Management System. Moreover, as the communication device will use a licenced radio band then it is not allowed to power-on its radio transmitter without operator control. However, the RNW configuration server may generate some static "pre-configuration" information at the same time as generating the installation information.

The installation information is preferably transmitted to the retailer's terminal via a secure web portal which in turn transmits it to the web server also via a secure web portal to be stored in the web server's database ready to be downloaded to the communication device at the time the communication device connects with the web server.

Preferably the communication device is a Home Base Station (HBS) and the preferred embodiments of the present invention provide an improved HBS installation process where the Network Operator provided installation information and configuration information is entered into the HBS after its physical installation at the premises where the HBS is to be deployed and without any information being entered directly to the HBS by the user or a retailer.

Preferred embodiments of the present invention will now be described, by way of example only, and with reference to the accompanying drawings, in which;
Figure 1 shows a use case diagram of the preferred embodiments of the present invention.
Figure 2 shows the signalling flow when the communication device is configured to operate in the network according to the preferred embodiments of the present invention.

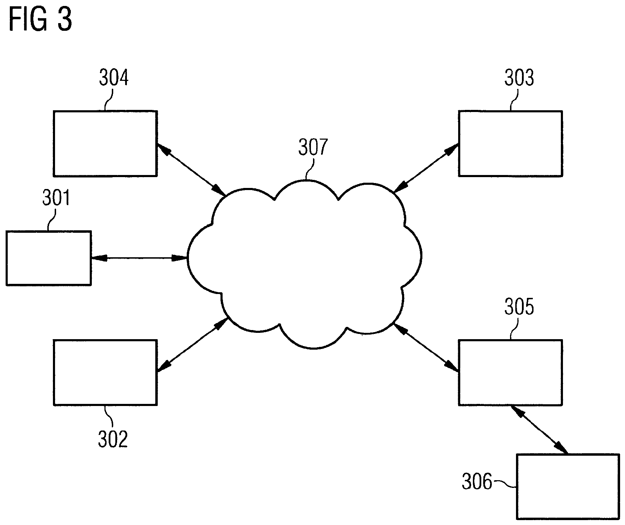

Figure 3 shows a schematic drawing of the system in accordance with the preferred embodiments of the present invention.

The communication device, preferably a Home Base Station (HBS) 301 which may also be referred to as a Femto Cell or a Residential Cell, provides an extension to the service coverage of a Network Operator so that a user can use their mobile device, e.g. a mobile phone, to make, for example, a voice call where traditionally no network service coverage or very limited coverage was available.

If a user 102 requires a HBS 301 to extend the network service coverage for their mobile terminal then the user 102 will have a subscription with a Network Operator 104 for their mobile device, e.g. a mobile phone. Alternatively, at the time of purchasing the HBS 301 the user 102 may also purchase a subscription to a Network Operator 104 or may even purchase a subscription to a Network Operator 104 at a later date. However, when the user 102 physically installs the HBS 301 at their premises they will require a subscription to a Network Operator 104 in order to complete the installation and configuration process of the HBS 301 and provide service coverage from the Network Operator 104 to which they are subscribed.

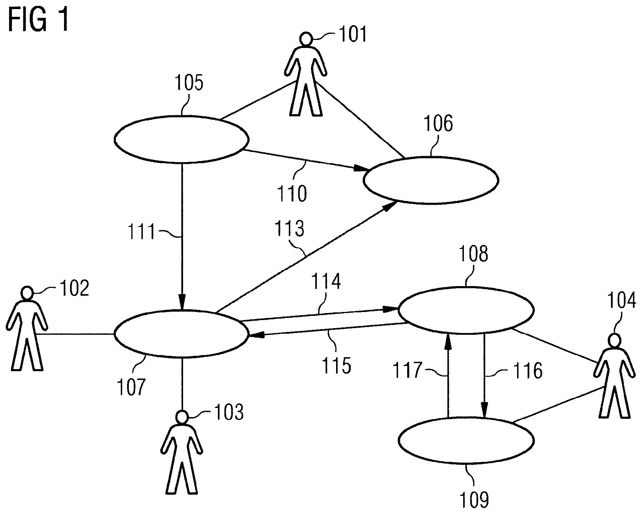

Figure 1 shows a use case diagram of the overall process and the interactions between the various agents in the preferred embodiments of the present invention.

Typically there are various Network Operators that offer different subscriptions to their services for mobile communication to the user 102. The user 102 will choose, or have chosen, a subscription from a particular Network Operator 104 that best suits the user's requirements and expectations. An advantage of the present invention is that each communication device, e.g. the HBS 301, is independent of the individual Network Operators and so the user may also choose the communication device that best suits the user's requirements without needing to take into account which HBS 301 will work with certain Network Operators.

As each HBS 301 is independent of the individual Network Operators then the HBS 301 will need to be informed of which Network Operator 104 they are to connect to in order to configure the HBS 301 for deployment in a particular Network Operator's network. This is because each Network Operator will have their own network management systems, network planning systems, subscription management systems and RNW configuration systems.

During the manufacturing and shipping process a minimal set of identifiers and parameters are stored in a non-volatile memory in the HBS 301. The identifiers and parameters preferably include an address, preferably in the form of a URL or an IP address, of a web server 303, the type of HBS 301 manufactured, a serial number, preferably unique to the HBS 301, and a security token which will be used to authenticate the HBS 301.

A web server 303 is connected to a network 307, such as the Internet, and includes a database for storing several pieces of information. The web server 106, 303 receives hardware parameters of each manufactured HBS 301 and stores those hardware parameters in the database. The web server 106, 303 receives 110 the hardware parameters from the manufacturer 101 via a terminal 304 during the manufacturing and shipping process 105 of the HBS 301 or the web server 106, 303 receives 113 the hardware parameters from the retailer 103 via a terminal 302 during the process of a user purchasing 107 the HBS 301.

If the web server 106, 303 receives 110 the hardware parameters during the manufacturing and shipping process 105 then the hardware parameters may be entered manually into the database on the web server 106, 303 via a secure web portal or, more preferably, the hardware parameters are entered automatically into the database on the web server 106, 303 via an automatic update from a terminal 304 at the manufacturer's premises over a network 307, such as the Internet.

As a person skilled in the art will appreciate, several methods could be used to automatically transmit and store in a database located on a web server 106, 303 the hardware information of each HBS 301 during the manufacturing and shipping process 105 of each HBS 301.

If the web server 106, 303 receives 113 the hardware parameters from the retailer 103 via a terminal 302 during the purchasing process 107 then the hardware parameters are obtained from the HBS 301 by the retailer 103, for example, by scanning and reading a barcode attached to the HBS packaging, and transmitting the hardware parameters to the web server 106, 303 via, for example, a secure web portal.

The database located on the web server 106, 303 may store the information deposited in the database permanently although it is expected that the information will only be stored temporarily until the HBS 301 has been fully configured and is deployed in the network of the Network Operator 104 to which the user 102 is subscribed.

The HBS 301 can connect to the web server 303 using the address stored in the non-volatile memory of each HBS 301 during the manufacturing and shipping process 105. This facilitates the automatic and autonomous retrieval of installation information for the HBS 301 from the web server 303. This enables the preferred embodiments to have the significant advantage that the installation information of the Network Operator 104 can be applied to the "empty shell" of the HBS 301 automatically without any person directly interacting with the HBS 301.

In the preferred embodiments of the present invention it is also advantageous to store in the non-volatile memory of the HBS 301 a security token which can be used to authenticate and validate the HBS 301 when it attempts to connect to the web server 303 once it has been physically installed and powered up.

The user 102 purchases 107 the HBS 301 of their choice from a retailer 103. The retailer 103 has a terminal 302 that is in communication with the web server 303 via a network 307, such as the Internet. In the preferred embodiments the interface between the retailer's terminal 302 and the web server 303 is via a secure web portal. The retailer's terminal 302 may be located in the retailer's premises that the user 102 visits to view and purchase an HBS 301 or the retailer's terminal 302 may be located on the Internet allowing a user 102 to purchase the HBS 301 over the Internet, i.e. buy the HBS 301 online.

At the point of sale 107 to the user 102 of the HBS 301, the user 102 provides various pieces of user information. The information provided by the user 102 for the installation and configuration process of the HBS 301 preferably includes the address of the premises at which the HBS 301 will be located once in operation, the identity of the Network Operator 104 to which the user 102 is, or will be, subscribed and a subscription identity such as the user's mobile phone number. The subscription to a Network Operator 104 may be the user's existing subscription or the user may purchase a new subscription at the time of purchasing the HBS 301.

The address of the premises at which the HBS 301 will be located will be used to enable the Network Operator 104 to configure and activate the HBS 301 in their network. The location of the HBS 301 is important for the final configuration process controlled by the Network Operator 104 as it enables the Network Operator 104 to determine the nearest by HBS Gateway (connection point to the Network Operator 104) and the neighbouring radio environment e.g. the neighbouring macro cells and their radio parameters (assuming the Network Operator 104 provides wireless services in the area). The radio parameters in the HBS 301 must be adjusted so that it does not cause interference to neighbouring macro cells.

The retailer's terminal 302 connects via a network 307, such as the Internet, to the Network Operator's Network Management System 108, 305 via a secure interface such as a secure web portal. The retailer 103 transmits 114, via the retailer's terminal 302, the user information and the hardware parameters of the HBS 301 to the Network Operator's Network Management System 108, 305.

The Network Management System 108, 305 of the Network Operator 104 to which the user 102 will be subscribed checks and authenticates the user's subscription based on the received user information and the received hardware parameters of the HBS 301. The Network Management System 108, 305 verifies that the user 102 has a subscription with the Network Operator 104 based on the received user name and user mobile phone number. If the user 102 has an existing subscription then the HBS service will be added as a new service to the user's 102 existing subscription. However, if the user 102 does not have an existing subscription the user is added as a new subscriber to the Network Operator 104 and the HBS service is added to the new subscription.

Once the user's subscription has been verified by the Network Operator's Network Management System 108, 305 the hardware parameters of the HBS and the relevant pieces of user information such as the user's address and subscription identity, e.g. the user's mobile phone number, are transmitted 116 to the RNW Configuration System 109, 306. As mentioned above, the location where the HBS 301 is to be deployed is particularly important as it determines the region where the HBS 301 will be installed, the nearest HBS Gateway and the local radio environment.

The RNW Configuration System 109, 306 generates installation information for the HBS 301 purchased by the user 102. In the preferred embodiments the installation information generated by the RNW Configuration System 109, 306 includes the minimum information required to enable the HBS 301 to connect with the Network Operator's Operation & Maintenance Server or Auto Configuration Server which provides entry to the Operator's overall Network Management System 108, 305, either directly or via a local HBS Gateway, in order to retrieve the complete configuration information that is used configure the HBS 301 into an operational state in the Network Operator's network. The installation information therefore includes an address, preferably in the form of a URL or an IP address, of the point of entry for the HBS 301 to enter the Network Management System 108, 305 and also preferably includes a security token which will allow the HBS 301 to be authenticated.

The installation information is transmitted 117 from the RNW Configuration system 109, 306 to the Network Operator's Network Management System 108, 305. The Network Management System 108, 305 forwards 115 the installation information to the retailer's terminal 302 via a secure web portal that interfaces between the retailer's terminal 302 and the Network Management System 108, 305. The web server 106, 303 receives113 via a secure web portal the installation information from the retailer's terminal 302 and the installation information is stored in the web server database. The web server 106, 303 may also receive the hardware parameters of the HBS 301 from the retailer's terminal 302.

The web server 106, 303 links the installation information to at least the hardware parameters of the HBS 301 so that the correct installation information can be retrieved for a particular HBS 301 when it connects to the web server 106, 303 once the HBS 301 has been physically installed and powered up.

The retailer 103, via the retailer's terminal 302, may also transmit the user information to the web server 106, 303 to be stored in the database alongside the hardware parameters of the HBS 301 and the generated installation information.

The RNW Configuration System 109, 306 may, at the same time as generating the installation information, also generate static "pre-configuration" information to be stored in its database. The static pre-configuration information may include, for example, a HBS Identifier, a used radio frequency, a list of neighbouring cells based on the address of the location at which the HBS 301 will be deployed, etc. This pre-configuration information can be considered an initial record of the HBS 301 that will connect at a later time to the Network Operator's Network Management System 108, 305 once the user has physically installed and powered up the HBS 301 for the first time. However, due to the fact that the complete configuration information includes dynamic parameters then the RNW Configuration system 109, 306 will not generate the complete configuration information until the HBS 301 connects with the Network Management System 108, 305 to obtain this configuration information and perform the configuration process.

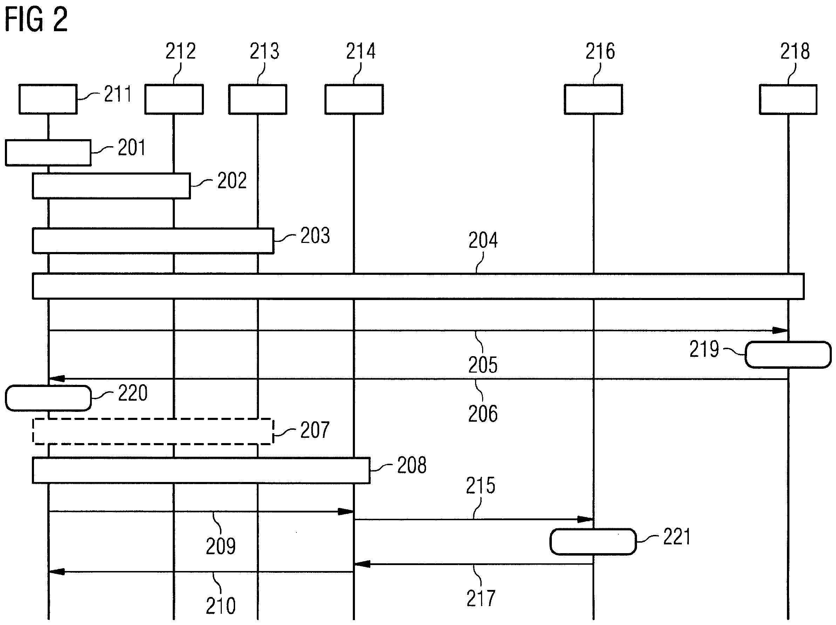

In the preferred embodiments the automatic and autonomous configuration of the HBS, once it has been physically installed, follows the steps shown in Figure 2 which illustrates the signalling flow of the process.

Once the user has purchased the HBS and the necessary information has been generated then the user can physically install the HBS at the premises at which the HBS is to be deployed. The user connects the HBS to a power source and to a network. Typically, the user will connect the HBS to the network via a broadband connection.

In step 201, a HBS 211 is powered up and performs an internal boot and self test process in order to initialise the hardware and verify the HBS 211 is in a working condition. The initialisation uses automatic configuration software that has been stored in the non-volatile memory in the HBS 211.

In step 202, the HBS 211 establishes IP connectivity to the network (Internet access) using the broadband connection using DHCP (Dynamic Host Configuration Protocol) negotiation in order to obtain an IP address, DNS (Domain Name Server) address and other network parameters from a local ISP (Internet Service Provider) DCHP server 212.

In step 203, the HBS 211 detects that its state is "non-commissioned" so the HBS retrieves the address of the web server from its non-volatile memory where it was stored during the manufacturing process and resolves the web server's IP address from the local ISP's DNS server 213.

In step 204, the HBS 211 establishes a secure TCP (Transmission Control Protocol) connection to a web server 218 via, for example, a SSH (Secure Shell) or a IPSec (Internet Protocol Security) connection using the information stored in the non-volatile memory of the HBS 211 during the manufacturing process.

The process of connecting the HBS 211 to the web server 218 preferably includes means for authenticating and validating the HBS 211. During the manufacturing and shipping process of the HBS 211 it is preferable that a security token is stored in the non-volatile memory of the HBS 211. On attempting to connect to the web server 218 the HBS 211 is authenticated by the web server 218 using the security token.

In step 205, the HBS 211 transmits an installation information request message to the web server 218 using, for example, SOAP (Simple Object Access Protocol). The SOAP message contains the hardware parameters of the HBS 211 that were stored in the non-volatile memory of the HBS 211 during the manufacturing and shipping process.

In step 206, the web server 218 retrieves 219 from its database at least the installation information that corresponds to the received hardware parameters and transmits 206 the installation information to the HBS 211 in an installation information reply message. The HBS 211 stores the installation information in its non-volatile memory 220. The web server 218 may also retrieve 219 and transmit 206 the user information previously stored in the web server database to the HBS 211 which will then also store the user information in its non-volatile memory 220.

As described above, the installation information preferably includes the minimal parameters necessary to enable the HBS to connect with the Network Management System of the Network Operator to which they are subscribed. Accordingly, the installation information includes an address of the Network Operator's Network Management System either in the form of a URL or an IP address and preferably also a security token to enable the Network Management System to authenticate and validate the HBS that is attempting to connect with it.

Alternatively, the URL or IP address may instead define an address of the nearest HBS Gateway in the region where the HBS is physically installed. The HBS Gateway provides the HBS with access to the Network Operator's Network Management System.

Once the installation information has been downloaded and stored in the HBS then the HBS is able to connect to the Network Operator's Network Management System, either directly or via the HBS Gateway, using the address defined in the installation information. Preferably, the installation information also contained a security token to enable the HBS to be authenticated and validated by the Network Operator's Network Management System at the time that the HBS connects with the Network Operator's Network Management System.

In Figure 2 the installation information received from the web server 218 includes a URL of the HBS Gateway local to the HBS 211.

In step 207, the HBS 211 resolves an Operation and Maintenance Server (OMS) IP address from the local ISP's DNS Server 213 based on the URL received in the installation information. The OMS is typically an Auto Configuration Server (ACS) located within the HBS Gateway 214. Alternatively, as mentioned above if the installation information defined the IP address of the OMS (rather than a URL of the OMS) then the HBS will not have to resolve the IP address from the ISP's DSN Server.

In step 208, the HBS 211 establishes a secure connection with the ACS at the HBS Gateway 214 via, for example, a TCP connection using, for example, SSH, TLS (Transport Layer Security) or IPSec based on the information retrieved from the received installation information.

In step 209, the HBS 211 transmits 209 a Registration message to the HBS Gateway which comprises the hardware parameters of the HBS, relevant portions of the installation information, the current software version and any further optional user information. The HBS Gateway transmits 215 the relevant information to the Network Operator's Network Management System. Alternatively, as mentioned above, the HBS may instead establish a secure connection directly with the Network Operator's Network Management System instead of via a local HBS Gateway. In this case, the HBS may transmit the Registration message directly to the Network Management System.

At this stage the HBS may be authenticated by the Network Management System or the HBS Gateway before it is permitted to continue with the configuration process.

In step 210, the Network Management System (or alternatively the HBS Gateway) verifies that the HBS can be located in its database 221. The current software version of the HBS is also checked in order to determine whether a software upgrade is required. The Network Management System, either directly or via the HBS Gateway, transmits 217, 210 a Registration Response message to the HBS which indicates whether the registration is successful and in this case whether a software upgrade is required. If a software upgrade is required then this is initiated following standard and well-known techniques for retrieving a software upgrade from either the web server, the Network Management System or the manufacturer's server.

However, if the registration is unsuccessful because the HBS is not located in the database of the Network Management System then the registration response message indicates that the registration was rejected.

Once the registration is successful and the HBS has a connection with the Network Management System then the Network Operator can configure the HBS into an operational state in their network.

The configuration process is a standard process that is well-known in the art which comprises the steps of initiating Base Transceiver Station (BTS) commissioning by sending the Start BTS Commissioning message to the HBS using SOAP protocol. The HBS starts a Radio Environment measurement procedure which includes scanning the radio environment in the frequency band that the HBS can support.

Upon completion of the Radio Environment measurement procedures the HBS 301 creates an Environment Report that is transmitted to the Network Management System 305. The RNW Configuration server 306 generates initial RNW configuration parameters based on the received user information, HBS parameters and the radio environment measurements reports from the HBS 301.

The RNW configuration information is generated at the time that the HBS 301 connects with the Network Management System 305. The HBS 301 will initially connect with the Network Operator's Operation & Maintenance Server or Auto Configuration Server to enter the Operator's Network Management System 305. As mentioned previously the RNW Configuration server 306 may have already generated "pre-configuration" static information which is stored only in the Network Management System 305 and linked with the hardware parameters of the HBS 301 but may also be linked with user information such as their subscription reference. The static pre-configuration information may be used by the RNW Configuration server 306 when generating the RNW configuration information.

This arrangement has the advantage of increasing the security of the configuration process as the Network Operator 104 maintains control over the final configuration of the HBS 301 into an operational state in the Network Operator's network.

In order for the relevant parts of the Network Management System 305 to authenticate the HBS 301 and generate the configuration information the HBS 301 preferably transmits its hardware parameters such as the HBS Type and its unique serial number as a key to access and retrieve related information from the Network Management System 305, such as the static "pre-configuration" information that may have been previously generated. The Network Management System 305 and the RNW Configuration server 306 use the hardware parameters to identify any static pre-configuration information and to generate the RNW configuration information for the HBS 301. The Network Management System 305 may also use the user information for additional security to verify consistency with the user subscription.

The Network Management System 305 transmits the initial RNW configuration information to the HBS 301 which it stores in its non-volatile memory and uses the configuration information to commission the HBS 301 into an operational state. Once the HBS 301 has been commissioned it will be forced to restart and reboot at which point the HBS 301 will be operational in the Network Operator's network.

Accordingly, the preferred embodiments of the present invention provide the means and methods for advantageously enabling an automatic and autonomous configuration of Home Base Stations. The manufactured Home Base Stations are not bound to any Network Operator as the preferred embodiments of the present invention enable any Home base Station to be configured, without any direct human interaction with the Home Base Station, for deployment in any Network Operator's network.

The automatic and autonomous configuration of a communication device, such as a HBS, is achieved by storing an address of a web sever in the non-volatile memory of the HBS during its manufacturing process. Once the HBS is physically installed it will connect to the web server and retrieve installation information that was generated and stored in the web server during the purchase process of the HBS from a retailer. The installation information was generated by the Network Operator based on information about the HBS and information provided by the user. The installation information provides the HBS with the information required to connect to the Network Operator in order to receive configuration information and to perform the necessary configuration processes.

While preferred embodiments of the invention have been shown and described, it will be understood that such embodiments are described by way of example only. The following claims cover the invention.

## Claims

1. A method of operating a web server (218) for configuring a communication device (211) to operate in a network comprising the steps of:
receiving at least one hardware parameter of the communication device;
storing the at least one hardware parameter in a database;
receiving installation information for the communication device wherein the installation information is used in configuring the communication device and where the installation information corresponds to the received at least one hardware parameter;
storing the installation information in the database;
receiving a request from the communication device for the installation information; and
transmitting the installation information to the communication device,
**characterised in that** the method comprises an installation step after the communication device has performed dynamic host configuration protocol negotiation with a dynamic host configuration protocol server, the web server being an entity different to the dynamic host configuration protocol server, in which the web server provides installation information of a network operator to be applied the communication device, the installation information including the information required to enable the communication device to connect with an auto configuration server of the network operator in order to retrieve complete configuration information that is used in a subsequent installation step to configure the communication device into an operational state in the network.

2. The method as claimed in claim 1, in which the method further comprises the step of linking the received at least one hardware parameter with the received installation information in the database.

3. The method as claimed in claim 2 in which the step of transmitting the installation information to the communication device (211) further comprises the steps of:
retrieving the installation information from the database that is linked to the at least one hardware parameter of the communication device; and
transmitting the retrieved installation information to the communication device.

4. A web server (218) comprising:
an input for receiving at least one hardware parameter of a communication device (211) to be configured to operate in a network;
a storage space for storing the at least one hardware parameter wherein the storage space is a database;
an input for receiving installation information for the communication device where the installation information corresponds to the at least one hardware parameter;
the storage space for storing the installation information;
an input for receiving a request from the communication device for the installation information; and
an output for transmitting the installation information to the communication device,
**characterised in that** after the communication device has performed dynamic host configuration protocol negotiation with a dynamic host configuration protocol server, the web server being an entity different to the dynamic host configuration protocol server, in an installation step the web server is adapted to provide installation information of a network operator to be applied the communication device, the installation information including the information required to enable the communication device to connect with an auto configuration server of the network operator in order to retrieve complete configuration information that is used in a subsequent installation step to configure the communication device into an operational state in the network.

5. A computer program product comprising software code that when executed on a web server (218) performs the method of:
receiving at least one hardware parameter of a communication device (211) to be configured to operate in a network;
storing the at least one hardware parameter in a database;
receiving installation information for the communication device where the installation information corresponds to the at least one hardware parameter;
storing the installation information in the database;
receiving a request from the communication device for the installation information; and
transmitting the installation information to the communication device,
**characterised in that** the method comprises an installation step after the communication device has performed dynamic host configuration protocol negotiation with a dynamic host configuration protocol server, the web server being an entity different to the dynamic host configuration protocol server, in which the web server provides installation information of a network operator to be applied the communication device, the installation information including the information required to enable the communication device to connect with an auto configuration server of the network operator in order to retrieve complete configuration information that is used in a subsequent installation step to configure the communication device into an operational state in the network.

6. A method of configuring a communication device (211) to operate in a network, comprising the steps of:
retrieving a pre-configured address of a web server (218) pre-configured in the communication device and connecting to the web server at the address;
receiving installation information from the web server; and
processing the received installation information,
**characterised in that** the method comprises an installation step after the communication device has performed dynamic host configuration protocol negotiation with a dynamic host configuration protocol server, the web server being an entity different to the dynamic host configuration protocol server, in which the communication device receives from the web server installation information of a network operator to be applied the communication device, the installation information including the information required to enable the communication device to connect with an auto configuration server of the network operator in order to retrieve complete configuration information that is used in a subsequent installation step to configure the communication device into an operational state in the network.

7. The method as claimed in claim 6, further comprising the steps of:
pre-configuring the communication device (211) with at least one hardware parameter wherein the at least one hardware parameter is unique to the communication device; and
transmitting the at least one hardware parameter that is unique to the communication device to the web server (218) as part of the step of connecting to the web server.

8. The method as claimed claim 6 or 7 in which the installation information comprises an address of a network management system (216) and the step of processing the received installation information further comprises the steps of:
storing the installation information in the non-volatile memory of the communication device (211);
retrieving the address of the network management system from the non-volatile memory;
connecting to the network management system;
receiving configuration information from the network management system; and
processing the received configuration information.

9. The method as claimed in claim 8 further comprising the step of:
configuring the communication device (211) in accordance with the received configuration information such that the communication device is operational within a network operator's network.

10. The method as claimed in claim 8 or 9 in which the step of connecting to the network management system (216) includes transmitting the hardware parameters of the communication device to the network management system.

11. A communication device (211) comprising:
a storage space that is pre-configured with an address of a web server (218);
the communication device being configured to retrieve the pre-configured address and is further configured to connect to the web server at the address;
an input for receiving installation information from the web server; and
a processor for processing the received installation information,
**characterised in that** the communication device is adapted to perform an installation step after the communication device has performed dynamic host configuration protocol negotiation with a dynamic host configuration protocol server, the web server being an entity different to the dynamic host configuration protocol server, in which the communication device receives from the web server installation information of a network operator to be applied the communication device, the installation information including the information required to enable the communication device to connect with an auto configuration server of the network operator in order to retrieve complete configuration information that is used in a subsequent installation step to configure the communication device into an operational state in a network.

12. A computer program product comprising software code that when executed on a terminal (302) performs a method of:
receiving at least one hardware parameter of a communication device (211) to be configured to operate in a network;
receiving user information of a user of the communication device;
transmitting the at least one hardware parameter and the user information to a network management system (216);
receiving installation information from the network management system wherein the installation information is used in configuring the communication device; and
transmitting the installation information to a web server (218),
**characterised in that** the method comprises transmitting the installation information to be used in an installation after the communication device has performed dynamic host configuration protocol negotiation with a dynamic host configuration protocol server, the web server being an entity different to the dynamic host configuration protocol server, in which the web server provides installation information of a network operator to be applied the communication device, the installation information including the information required to enable the communication device to connect with a network management system of a network operator in order to retrieve complete configuration information that is used in a subsequent installation step to configure the communication device into an operational state in the network.

## Patentansprüche

1. Verfahren zum Betreiben eines Webservers (218) zum Konfigurieren eines Kommunikationsgeräts (211) für den Betrieb in einem Netz, das folgende Schritte umfasst:
Empfangen mindestens eines Hardwareparameters des Kommunikationsgeräts;
Ablegen des mindestens einen Hardwareparameters in einer Datenbank;
Empfangen von Installationsinformationen für das Kommunikationsgerät, wobei die Installationsinformationen beim Konfigurieren des Kommunikationsgeräts genutzt werden und wobei die Installationsinformationen mit dem mindestens einen empfangenen Hardwareparameter korrespondieren;
Ablegen der Installationsinformationen in der Datenbank;
Empfangen einer Anforderung der Installationsinformationen vom Kommunikationsgerät; und
Übertragen der Installationsinformationen an das Kommunikationsgerät,
**dadurch gekennzeichnet, dass** das Verfahren einen Installationsschritt, nachdem das Kommunikationsgerät eine Dynamic-Host-Configuration-Protocol-Verhandlung mit einem Dynamic-Host-Configuration-Protocol-Server durchgeführt hat, wobei der Webserver eine andere Komponente als der Dynamic-Host-Configuration-Protocol-Server ist, umfasst, wobei der Webserver Installationsinformationen eines Netzbetreibers zur Anwendung im Kommunikationsgerät bereitstellt, wobei die Installationsinformationen die Informationen enthalten, die erforderlich sind, um zu ermöglichen, dass das Kommunikationsgerät eine Verbindung zu einem Autokonfigurationsserver des Netzbetreibers herstellt, um vollständige Konfigurationsinformationen, die bei einem darauffolgenden Installationsschritt zum Konfigurieren des Kommunikationsgeräts für einen Betriebsstatus im Netz genutzt werden, abzurufen.

2. Verfahren nach Anspruch 1, wobei das Verfahren ferner einen Schritt des Verbindens des mindestens einen empfangenen Hardwareparameters mit den empfangenen Installationsinformationen in der Datenbank umfasst.

3. Verfahren nach Anspruch 2, wobei der Schritt des Übertragens der Installationsinformationen an das Kommunikationsgerät (211) ferner folgende Schritte umfasst:
Abrufen der Installationsinformationen aus der Datenbank, die mit dem mindestens einen Hardwareparameter des Kommunikationsgeräts verbunden sind; und
Übertragen der abgerufenen Installationsinformationen an das Kommunikationsgerät.

4. Webserver (218), der Folgendes umfasst:
eine Eingabe zum Empfangen mindestens eines Hardwareparameters eines Kommunikationsgeräts (211) zur Konfiguration für den Betrieb in einem Netz;
einen Datenspeicherraum für die Ablage des mindestens einen Hardwareparameters, wobei der Datenspeicherraum eine Datenbank ist;
eine Eingabe zum Empfangen von Installationsinformationen für das Kommunikationsgerät, wobei die Installationsinformationen mit dem mindestens einen Hardwareparameter korrespondieren;
den Datenspeicherraum für die Ablage der Installationsinformationen;
eine Eingabe zum Empfangen einer Anforderung der Installationsinformationen vom Kommunikationsgerät; und
eine Ausgabe zum Übertragen der Installationsinformationen an das Kommunikationsgerät,
**dadurch gekennzeichnet, dass** der Webserver, nachdem das Kommunikationsgerät eine Dynamic-Host-Configuration-Protocol-Verhandlung mit einem Dynamic-Host-Configuration-Protocol-Server durchgeführt hat, wobei der Webserver eine andere Komponente als der Dynamic-Host-Configuration-Protocol-Server ist, bei einem Installationsschritt dazu ausgelegt ist, Installationsinformationen eines Netzbetreibers zur Anwendung im Kommunikationsgerät bereitzustellen, wobei die Installationsinformationen die Informationen enthalten, die erforderlich sind, um zu ermöglichen, dass das Kommunikationsgerät eine Verbindung zu einem Autokonfigurationsserver des Netzbetreibers herstellt, um vollständige Konfigurationsinformationen, die bei einem darauffolgenden Installationsschritt zum Konfigurieren des Kommunikationsgeräts für einen Betriebsstatus im Netz genutzt werden, abzurufen.

5. Computerprogrammprodukt, das Softwarecode umfasst, der bei der Ausführung auf einem Webserver (218) folgendes Verfahren durchführt:
Empfangen mindestens eines Hardwareparameters eines Kommunikationsgeräts (211) zur Konfiguration für den Betrieb in einem Netz;
Ablegen des mindestens einen Hardwareparameters in einer Datenbank;
Empfangen von Installationsinformationen für das Kommunikationsgerät, wobei die Installationsinformationen mit dem mindestens einen Hardwareparameter korrespondieren;
Ablegen der Installationsinformationen in der Datenbank;
Empfangen einer Anforderung der Installationsinformationen vom Kommunikationsgerät; und
Übertragen der Installationsinformationen an das Kommunikationsgerät,
**dadurch gekennzeichnet, dass** das Verfahren einen Installationsschritt, nachdem das Kommunikationsgerät eine Dynamic-Host-Configuration-Protocol-Verhandlung mit einem Dynamic-Host-Configuration-Protocol-Server durchgeführt hat, wobei der Webserver eine andere Komponente als der Dynamic-Host-Configuration-Protocol-Server ist, umfasst, wobei der Webserver Installationsinformationen eines Netzbetreibers zur Anwendung im Kommunikationsgerät bereitstellt, wobei die Installationsinformationen die Informationen enthalten, die erforderlich sind, um zu ermöglichen, dass das Kommunikationsgerät eine Verbindung zu einem Autokonfigurationsserver des Netzbetreibers herstellt, um vollständige Konfigurationsinformationen, die bei einem darauffolgenden Installationsschritt zum Konfigurieren des Kommunikationsgeräts für einen Betriebsstatus im Netz genutzt werden, abzurufen.

6. Verfahren zum Konfigurieren eines Kommunikationsgeräts (211) für den Betrieb in einem Netz, das folgende Schritte umfasst:
Abrufen einer vorkonfigurierten Adresse eines Webservers (218), die im Kommunikationsgerät vorkonfiguriert ist, und Herstellen einer Verbindung zum Webserver unter der Adresse;
Empfangen von Installationsinformationen vom Webserver; und
Verarbeiten der empfangenen Installationsinformationen,
**dadurch gekennzeichnet, dass** das Verfahren einen Installationsschritt, nachdem das Kommunikationsgerät eine Dynamic-Host-Configuration-Protocol-Verhandlung mit einem Dynamic-Host-Configuration-Protocol-Server durchgeführt hat, wobei der Webserver eine andere Komponente als der Dynamic-Host-Configuration-Protocol-Server ist, umfasst, wobei das Kommunikationsgerät vom Webserver Installationsinformationen eines Netzbetreibers zur Anwendung im Kommunikationsgerät empfängt, wobei die Installationsinformationen die Informationen enthalten, die erforderlich sind, um zu ermöglichen, dass das Kommunikationsgerät eine Verbindung zu einem Autokonfigurationsserver des Netzbetreibers herstellt, um vollständige Konfigurationsinformationen, die bei einem darauffolgenden Installationsschritt zum Konfigurieren des Kommunikationsgeräts für einen Betriebsstatus im Netz genutzt werden, abzurufen.

7. Verfahren nach Anspruch 6, das ferner folgende Schritte umfasst:
Vorkonfigurieren des Kommunikationsgeräts (211) mit mindestens einem Hardwareparameter, wobei der mindestens eine Hardwareparameter eindeutig für das Kommunikationsgerät ist; und
Übertragen des mindestens einen Hardwareparameters, der eindeutig für das Kommunikationsgerät ist, an den Webserver (218) im Rahmen des Schritts des Herstellens einer Verbindung zum Webserver.

8. Verfahren nach Anspruch 6 oder Anspruch 7, wobei die Installationsinformationen eine Adresse eines Netzmanagementsystems (216) umfassen und der Schritt des Verarbeitens der empfangenen Installationsinformationen ferner folgende Schritte umfasst:
Ablegen der Installationsinformationen im nichtflüchtigen Speicher des Kommunikationsgeräts (211);
Abrufen der Adresse des Netzmanagementsystems aus dem nichtflüchtigen Speicher;
Herstellen einer Verbindung zum Netzmanagementsystem;
Empfangen von Konfigurationsinformationen aus dem Netzmanagementsystem; und
Verarbeiten der empfangenen Konfigurationsinformationen.

9. Verfahren nach Anspruch 8, das ferner folgenden Schritt umfasst:
Konfigurieren des Kommunikationsgeräts (211) gemäß den empfangenen Konfigurationsinformationen, sodass das Kommunikationsgerät innerhalb des Netzes eines Netzbetreibers betriebsbereit ist.

10. Verfahren nach Anspruch 8 oder Anspruch 9, wobei der Schritt des Herstellens einer Verbindung zum Netzmanagementsystem (216) Übertragen der Hardwareparameter des Kommunikationsgeräts an das Netzmanagementsystem enthält.

11. Kommunikationsgerät (211), das Folgendes umfasst:
einen Datenspeicherraum, der mit einer Adresse eines Webservers (218) vorkonfiguriert ist;
wobei das Kommunikationsgerät konfiguriert ist, um die vorkonfigurierte Adresse abzurufen, und ferner konfiguriert ist, um eine Verbindung zum Webserver unter der Adresse herzustellen;
eine Eingabe zum Empfangen von Installationsinformationen vom Webserver; und
einen Prozessor zum Verarbeiten der empfangenen Installationsinformationen,
**dadurch gekennzeichnet, dass** das Kommunikationsgerät dazu ausgelegt ist, einen Installationsschritt, nachdem das Kommunikationsgerät eine Dynamic-Host-Configuration-Protocol-Verhandlung mit einem Dynamic-Host-Configuration-Protocol-Server durchgeführt hat, wobei der Webserver eine andere Komponente als der Dynamic-Host-Configuration-Protocol-Server ist, durchzuführen, wobei das Kommunikationsgerät vom Webserver Installationsinformationen eines Netzbetreibers zur Anwendung im Kommunikationsgerät empfängt, wobei die Installationsinformationen die Informationen enthalten, die erforderlich sind, um zu ermöglichen, dass das Kommunikationsgerät eine Verbindung zu einem Autokonfigurationsserver des Netzbetreibers herstellt, um vollständige Konfigurationsinformationen, die bei einem darauffolgenden Installationsschritt zum Konfigurieren des Kommunikationsgeräts für einen Betriebsstatus in einem Netz genutzt werden, abzurufen.

12. Computerprogrammprodukt, das Softwarecode umfasst, der bei der Ausführung in einem Endgerät (302) folgendes Verfahren durchführt:
Empfangen mindestens eines Hardwareparameters eines Kommunikationsgeräts (211) zur Konfiguration für den Betrieb in einem Netz;
Empfangen von Benutzerinformationen eines Benutzers des Kommunikationsgeräts;
Übertragen des mindestens einen Hardwareparameters und der Benutzerinformationen an ein Netzmanagementsystem (216);
Empfangen von Installationsinformationen aus dem Netzmanagementsystem, wobei die Installationsinformationen beim Konfigurieren des Kommunikationsgeräts genutzt werden; und
Übertragen der Installationsinformationen an einen Webserver (218),
**dadurch gekennzeichnet, dass** das Verfahren Übertragen der Installationsinformationen zur Nutzung bei einer Installation, nachdem das Kommunikationsgerät eine Dynamic-Host-Configuration-Protocol-Verhandlung mit einem Dynamic-Host-Configuration-Protocol-Server durchgeführt hat, wobei der Webserver eine andere Komponente als der Dynamic-Host-Configuration-Protocol-Server ist, umfasst, wobei der Webserver Installationsinformationen eines Netzbetreibers zur Anwendung im Kommunikationsgerät bereitstellt, wobei die Installationsinformationen die Informationen enthalten, die dafür erforderlich sind, dass das Kommunikationsgerät eine Verbindung zu einem Netzmanagementsystem eines Netzbetreibers herstellt, um vollständige Konfigurationsinformationen, die bei einem darauffolgenden Installationsschritt zum Konfigurieren des Kommunikationsgeräts für einen Betriebsstatus im Netz genutzt werden, abzurufen.

## Revendications

1. Procédé de fonctionnement d'un serveur Web (218) pour configurer un dispositif de communication (211) à faire fonctionner dans un réseau, le procédé comprenant les étapes comprenant :
la réception d'au moins un paramètre de matériel du dispositif de communication ;
le stockage de l'au moins un paramètre de matériel dans une base de données ;
la réception d'une information d'installation pour le dispositif de communication, l'information d'installation étant utilisée pour configurer le dispositif de communication et l'information d'installation correspondant à l'au moins un paramètre de matériel reçu ;
le stockage de l'information d'installation dans la base de données ;
la réception d'une demande en provenance du dispositif de communication pour l'information d'installation ; et
la transmission de l'information d'installation au dispositif de communication,
le procédé étant **caractérisé en ce qu'**il comprend, après la réalisation, par le dispositif de communication, d'une négociation sur protocole de configuration dynamique d'hôte avec un serveur sur protocole de configuration dynamique d'hôte, le serveur Web étant une entité différente du serveur sur protocole de configuration dynamique d'hôte, une étape d'installation au cours de laquelle le serveur Web fournit une information d'installation d'un opérateur de réseau à appliquer au dispositif de communication, l'information d'installation incluant l'information requise pour permettre au dispositif de communication de se connecter à un serveur de configuration automatique de l'opérateur de réseau afin de récupérer une information de configuration complète qui est utilisée dans une étape d'installation ultérieure pour configurer le dispositif de communication dans un état opérationnel dans le réseau.

2. Procédé selon la revendication 1, le procédé comprenant en outre l'étape comprenant la liaison de l'au moins un paramètre de matériel reçu à l'information d'installation reçue dans la base de données.

3. Procédé selon la revendication 2, dans lequel l'étape de transmission de l'information d'installation au dispositif de communication (211) comprend en outre les étapes comprenant :
la récupération dans la base de données de l'information d'installation qui est liée à l'au moins un paramètre de matériel du dispositif de communication ; et
la transmission de l'information d'installation récupérée au dispositif de communication.

4. Serveur Web (218), comprenant :
une entrée pour recevoir au moins un paramètre de matériel d'un dispositif de communication (211) à configurer pour le faire fonctionner dans un réseau ;
un espace de stockage pour stocker l'au moins un paramètre de matériel, l'espace de stockage étant une base de données ;
une entrée pour recevoir une information d'installation pour le dispositif de communication, l'information d'installation correspondant à l'au moins un paramètre de matériel ;
l'espace de stockage pour stocker l'information d'installation ;
une entrée pour recevoir une demande en provenance du dispositif de communication pour l'information d'installation ; et
une sortie pour transmettre l'information d'installation au dispositif de communication,
le serveur Web étant **caractérisé en ce qu'**il est conçu, après la réalisation, par le dispositif de communication, d'une négociation sur protocole de configuration dynamique d'hôte avec un serveur sur protocole de configuration dynamique d'hôte, le serveur Web étant une entité différente du serveur sur protocole de configuration dynamique d'hôte, pour fournir, au cours d'une étape d'installation, une information d'installation d'un opérateur de réseau à appliquer au dispositif de communication, l'information d'installation incluant l'information requise pour permettre au dispositif de communication de se connecter à un serveur de configuration automatique de l'opérateur de réseau afin de récupérer une information de configuration complète qui est utilisée dans une étape d'installation ultérieure pour configurer le dispositif de communication dans un état opérationnel dans le réseau.

5. Produit de programme informatique, comprenant un code logiciel qui, lorsqu'il est exécuté sur un serveur Web (218), réalise le procédé comprenant :
la réception d'au moins un paramètre de matériel d'un dispositif de communication (211) à configurer pour le faire fonctionner dans un réseau ;
le stockage de l'au moins un paramètre de matériel dans une base de données ;
la réception d'une information d'installation pour le dispositif de communication, l'information d'installation correspondant à l'au moins un paramètre de matériel ;
le stockage de l'information d'installation dans la base de données ;
la réception d'une demande en provenance du dispositif de communication pour l'information d'installation ; et
la transmission de l'information d'installation au dispositif de communication,
le procédé étant **caractérisé en ce qu'**il comprend, après la réalisation, par le dispositif de communication, d'une négociation sur protocole de configuration dynamique d'hôte avec un serveur sur protocole de configuration dynamique d'hôte, le serveur Web étant une entité différente du serveur sur protocole de configuration dynamique d'hôte, une étape d'installation au cours de laquelle le serveur Web fournit une information d'installation d'un opérateur de réseau à appliquer au dispositif de communication, l'information d'installation incluant l'information requise pour permettre au dispositif de communication de se connecter à un serveur de configuration automatique de l'opérateur de réseau afin de récupérer une information de configuration complète qui est utilisée dans une étape d'installation ultérieure pour configurer le dispositif de communication dans un état opérationnel dans le réseau.

6. Procédé de configuration d'un dispositif de communication (211) à faire fonctionner dans un réseau, le procédé comprenant les étapes comprenant :
la récupération d'une adresse préconfigurée d'un serveur Web (218), préconfigurée dans le dispositif de communication, et la connexion au serveur Web à ladite adresse ;
la réception d'une information d'installation en provenance du serveur Web ; et
le traitement de l'information d'installation reçue,
le procédé étant **caractérisé en ce qu'**il comprend, après la réalisation, par le dispositif de communication, d'une négociation sur protocole de configuration dynamique d'hôte avec un serveur sur protocole de configuration dynamique d'hôte, le serveur Web étant une entité différente du serveur sur protocole de configuration dynamique d'hôte, une étape d'installation au cours de laquelle le dispositif de communication reçoit en provenance du serveur Web une information d'installation d'un opérateur de réseau à appliquer au dispositif de communication, l'information d'installation incluant l'information requise pour permettre au dispositif de communication de se connecter à un serveur de configuration automatique de l'opérateur de réseau afin de récupérer une information de configuration complète qui est utilisée dans une étape d'installation ultérieure pour configurer le dispositif de communication dans un état opérationnel dans le réseau.

7. Procédé selon la revendication 6, comprenant en outre les étapes comprenant :
la préconfiguration du dispositif de communication (211) avec au moins un paramètre de matériel, l'au moins un paramètre de matériel étant unique sur le dispositif de communication ; et
la transmission de l'au moins un paramètre de matériel qui est unique sur le dispositif de communication au serveur Web (218) dans le cadre de l'étape de connexion au serveur Web.

8. Procédé selon la revendication 6 ou 7, dans lequel l'information d'installation comprend une adresse d'un système de gestion de réseau (216) et l'étape de traitement de l'information d'installation reçue comprend en outre les étapes comprenant :
le stockage de l'information d'installation dans la mémoire non volatile du dispositif de communication (211) ;
la récupération dans la mémoire non volatile de l'adresse du système de gestion de réseau ;
la connexion au système de gestion de réseau ;
la réception d'une information de configuration en provenance du système de gestion de réseau ; et
le traitement de l'information de configuration reçue.

9. Procédé selon la revendication 8 comprenant en outre l'étape comprenant :
la configuration du dispositif de communication (211) selon l'information de configuration reçue, de sorte que le dispositif de communication soit opérationnel dans un réseau d'un opérateur de réseau.

10. Procédé selon la revendication 8 ou 9, dans lequel l'étape de connexion au système de gestion de réseau (216) comprend la transmission des paramètres de matériel du dispositif de communication au système de gestion de réseau.

11. Dispositif de communication (211), comprenant :
un espace de stockage qui est préconfiguré avec une adresse d'un serveur Web (218) ;
le dispositif de communication étant configuré pour récupérer l'adresse préconfigurée et étant en outre configuré pour se connecter au serveur Web à ladite adresse ;
une entrée pour recevoir une information d'installation en provenance du serveur Web ; et
un processeur pour traiter l'information d'installation reçue,
le dispositif de communication étant **caractérisé en ce qu'**il est conçu pour réaliser, après la réalisation, par le dispositif de communication, d'une négociation sur protocole de configuration dynamique d'hôte avec un serveur sur protocole de configuration dynamique d'hôte, le serveur Web étant une entité différente du serveur sur protocole de configuration dynamique d'hôte, une étape d'installation au cours de laquelle le dispositif de communication reçoit en provenance du serveur Web une information d'installation d'un opérateur de réseau à appliquer au dispositif de communication, l'information d'installation incluant l'information requise pour permettre au dispositif de communication de se connecter à un serveur de configuration automatique de l'opérateur de réseau afin de récupérer une information de configuration complète qui est utilisée dans une étape d'installation ultérieure pour configurer le dispositif de communication dans un état opérationnel dans un réseau.

12. Produit de programme informatique, comprenant un code logiciel qui, lorsqu'il est exécuté sur un terminal (302), réalise un procédé comprenant :
la réception d'au moins un paramètre de matériel d'un dispositif de communication (211) à configurer pour le faire fonctionner dans un réseau ;
la réception d'une information d'utilisateur d'un utilisateur du dispositif de communication ;
la transmission de l'au moins un paramètre de matériel et l'information d'utilisateur à un système de gestion de réseau (216) ;
la réception d'une information d'installation en provenance du système de gestion de réseau, l'information d'installation étant utilisée pour configurer le dispositif de communication ; et
la transmission de l'information d'installation à un serveur Web (218),
le produit de programme informatique étant **caractérisé en ce que** le procédé comprend, après la réalisation, par le dispositif de communication, d'une négociation sur protocole de configuration dynamique d'hôte avec un serveur sur protocole de configuration dynamique d'hôte, le serveur Web étant une entité différente du serveur sur protocole de configuration dynamique d'hôte, une étape comprenant la transmission de l'information d'installation à utiliser dans une application, au cours de laquelle le serveur Web fournit une information d'installation d'un opérateur de réseau à appliquer au dispositif de communication, l'information d'installation incluant l'information requise pour permettre au dispositif de communication de se connecter à un système de gestion de réseau d'un opérateur de réseau afin de récupérer une information de configuration complète qui est utilisée dans une étape d'installation ultérieure pour configurer le dispositif de communication dans un état opérationnel dans le réseau.
